Europäisches Patentamt

European Patent Office

Office européen des brevets

(11) Veröffentlichungsnummer: **0 157 908**
**B1**

(12) **EUROPÄISCHE PATENTSCHRIFT**

(45) Veröffentlichungstag der Patentschrift:
05.07.89

(51) Int. Cl.⁴: **F 16 D 23/08**

(21) Anmeldenummer: 84113591.6

(22) Anmeldetag: 10.11.84

(54) Synchronisiereinrichtung für Schaltkupplungen.

(30) Priorität: 28.03.84 DE 3411351

(43) Veröffentlichungstag der Anmeldung:
16.10.85 Patentblatt 85/42

(45) Bekanntmachung des Hinweises auf die Patenterteilung:
05.07.89 Patentblatt 89/27

(84) Benannte Vertragsstaaten:
FR GB IT SE

(56) Entgegenhaltungen:
DE-A- 1 924 724
DE-A- 2 510 657
DE-A- 2 613 388
DE-B- 1 475 333
DE-B- 2 754 382
DE-C- 2 659 448
FR-A- 2 466 668

(73) Patentinhaber: GETRAG Getriebe- und Zahnradfabrik
GmbH, Postfach 449 Solitudeallee 24,
D-7140 Ludwigsburg (DE)

(72) Erfinder: Müller, Erich, Fuchsweg 1,
D-7014 Kornwestheim (DE)
Erfinder: Rühle, Günter, Dipl.-Ing. (FH), Karl
Gärttner-Strasse 21, D-7120 Bietigheim-Bissingen (DE)
Erfinder: Stocker, Wilhelm, Martin-Luther-Strasse 41,
D-7141 Oberstenfeld (DE)

(74) Vertreter: Witte, Alexander, Dr.-Ing.,
Schickhardtstrasse 24, D-7000 Stuttgart 1 (DE)

## Beschreibung

Die Erfindung betrifft eine Synchronisiereinrichtung für Schaltkupplungen, insbesondere von Schaltgetrieben für Kraftfahrzeuge, mit zumindest einem durch axiales Verschieben einer mit einer Welle über eine Führungsmuffe drehstarr verbundenen Schaltmuffe mit Innenverzahnung in den Kraftfluß ein- bzw. aus ihm ausschaltbaren Räderpaar, dessen mit der Schaltmuffe gleichachsiges Zahnrad eine Außenverzahnung aufweist, sowie mit einem Synchronisierring, der in Umfangsrichtung mit der Schaltmuffe in formschlüssiger und mit dem Zahnrad in reibschlüssiger Verbindung steht, wobei eine kraftschlüssige Verbindung in Axialrichtung zwischen dem Synchronisierring und der Schaltmuffe über eine erste Federrastanordnung und über einen ersten Anschlagkörper herstellbar ist und der Synchronisierring Sperrflächen für die Schaltmuffe aufweist, die ein Ineingriffkommen der Innenverzahnung der Schaltmuffe mit der Außenverzahnung erst bei Synchrondrehzahl zulassen.

Eine Synchronisiereinrichtung der vorstehend genannten Art, wie sie auch als Borg-Warner-Synchronisierung bekannt ist, ist in der DE-C-2 659 448 beschrieben.

Bei der bekannten Synchronisiereinrichtung wird beim Einlegen eines Ganges die Schaltmuffe, ausgehend von der neutralen Stellung, axial verschoben. Sie nimmt bei ihrer Axialbewegung über die Federrastung den Synchronisierring mit und drückt ihn gegen einen Gegenkonus des Kupplungskörpers. Dadurch wird eine reibschlüssige Verbindung zwischen Synchronisierring und Kupplungskörper hergestellt, die eine Drehzahlangleichung zwischen Welle, Schaltmuffe und Synchronisierring einerseits und Kupplungskörper und Zahnrad des einzuschaltenden Räderpaares andererseits bewirkt. Dabei wird, solange die Synchrondrehzahl nicht erreicht ist, der Synchronisierring vom Kupplungskörper in Umfangsrichtung gegenüber der Schaltmuffe so weit verdreht, wie es die formschlüssige Verbindung zwischen Synchronisierring und Schaltmuffe zuläßt. Dabei werden am Synchronisierring angebrachte Sperrflächen in eine Stellung gebracht, in der sie mit entsprechenden Sperrflächen an der Schaltmuffe in Eingriff kommen und ein axiales Verschieben der Schaltmuffe in Richtung auf den Kupplungskörper verhindern. Bei den bekannten Synchronisiereinrichtungen sind diese Sperrflächen gewöhnlich an einer Außenverzahnung des Synchronisierringes angebracht, die der Außenverzahnung des Kupplungskörpers gleicht, während die Gegenflächen an den Enden der Zähne angebracht sind, welche die Innenverzahnung der Schaltmuffe bilden. Nach Erreichen der Synchrondrehzahl läßt sich dann die Schaltmuffe an den Sperrflächen des Synchronisierringes vorbei in die Außenverzahnung des Kupplungskörpers einschieben. Dabei wird die mittels einer Federraste hergestellte Verbindung zwischen Schaltmuffe und Synchronisierring gelöst, weil der Synchronisierring der Axialbewegung der Schaltmuffe nur folgen kann, bis er am Gegenkonus des Kupplungskörpers zur Anlage gekommen ist. Die zum Kuppeln notwendige Weiterbewegung der Schaltmuffe macht eine Trennung der in Axialrichtung wirkenden Verbindung zwischen Schaltmuffe und Synchronisierring erforderlich.

Weitere Synchronisiereinrichtungen dieser und ähnlicher Art sind in der DE-A-1 924 724, der DE-A-2 510 657, der DE-A-2 613 388, der FR-A-2 466 668, der DE-B-2 754 382 sowie der DE-B-1 475 333 beschrieben.

Die bekannten Synchronisiereinrichtungen haben jedoch den Nachteil, daß auf den Synchronisierring keine Axialkraft mehr wirkt, nachdem die zwischen Schaltmuffe und Synchronisierring wirkende Federrastung gelöst und außerdem die Schaltmuffe die Sperrflächen am Synchronisierring passiert hat. Daher kann sich beim Schalten in dem Zeitintervall zwischen Aufhebung der auf den Synchronisierring wirkenden Axialkraft bis zur Herstellung der Verbindung zwischen Schaltmuffe und Kupplungskörper der Synchronisierring von dem Gegenkonus des Kupplungskörpers lösen und infolgedessen die hergestellte Synchronisierung wieder verloren gehen. Als Folge davon kommt es zu Schaltgeräuschen, weil die Zähne der Schaltmuffe und des Kupplungskörpers aneinander vorbei gleiten, bevor, ggf. unter erhöhtem Kraftaufwand, trotz der verlorengegangenen Synchronisierung der Formschluß zwischen Schaltmuffe und Zahnrad hergestellt worden ist.

Diese Gefahr der Störung beim Schalten ist besonders bei kaltem Getriebe sehr groß, wenn zähes Getriebeöl ein starkes Abbremsen der Radsätze verursacht, so daß die einer Synchronisierung entgegenstehenden Kräfte zu groß sind, als daß sie noch von einem unbelasteten Synchronisierring übertragen werden könnten.

Der Erfindung liegt demgegenüber die Aufgabe zugrunde, eine Synchronisiereinrichtung der eingangs genannten Art dahingehend weiterzubilden, daß es beim Schalten nach erreichter Synchronisierung nicht mehr zu unterschiedlichen Drehzahlen zwischen Schaltmuffe und Zahnrad kommen kann.

Diese Aufgabe wird erfindungsgemäß dadurch gelöst, daß ferner mindestens ein zweiter Anschlagkörper und eine zweite Federrastanordnung vorgesehen sind, über die ebenfalls eine kraftschlüssige Verbindung in Axialrichtung zwischen dem Synchronisierring und der Schaltmuffe herstellbar ist, und daß die Anschlagkörper eine solche axiale Abmessung aufweisen, daß der zweite Anschlagkörper mit einer als Axialanschlag wirkenden Stirnfläche einen Abstand von einer Gegenfläche des Synchronisierringes hat, wenn die kraftschlüssige Verbindung über den ersten Anschlagkörper hergestellt wird.

Die der Erfindung zugrundeliegende Aufgabe wird auf diese Weise vollkommen gelöst, weil dann, wenn die von der Schaltmuffe über die Sperrflächen auf den Synchronisierring ausgeübte Axialkraft entfällt, da die Sperrflächen zwischen Schaltmuffe und Synchronisierring außer Eingriff kommen, der zweite Anschlagkörper am Synchronisierring zur Anlage kommt und dadurch nun seinerseits eine Kraft in Axialrichtung auf den Synchronisierring ausübt. Diese später einsetzende Anlage des zweiten Anschlagkörpers ergibt sich daraus, daß die axialen Abmessungen in der oben genannten Weise ausgebildet sind, derart, daß der zweite Anschlagkörper in dem Augenblick, wenn der Kraftfluß zwischen dem ersten Anschlagkörper und dem Synchronisierring hergestellt wird, noch einen gewissen axialen Abstand von diesem aufweist. Erst wenn der erste Anschlagkörper unter Lösen der Federrastverbindung in axialer Richtung relativ zur Schaltmuffe verschoben wird, gelangt auch der zweite Anschlagkörper, der in diesem Augenblick über die Federrastverbindung in Axialrichtung noch fest mit der Schaltmuffe verbunden ist, in Anlage an den Synchronisierring.

Da demzufolge die axiale Belastung des Synchronisierringes nicht unterbrochen wird, kann der Synchronisierring sich auch nicht vom Gegenkonus des Zahnrades bzw. eines an diesem Zahnrad befindlichen Kupplungskörpers lösen.

Die Verbindung zwischen Schaltmuffe und zweitem Anschlagkörper wird ebenfalls über eine Federrastung hergestellt, die in einfacher Weise so ausgebildet werden kann, daß auf den Synchronisierring so lange eine ausreichend große Axialkraft ausgeübt wird, bis die Innenverzahnung der Schaltmuffe mit der Außenverzahnung des Kupplungskörpers in Eingriff gebracht worden ist. Danach kann die Federrastung außer Eingriff kommen, wenn die Schaltmuffe axial in die Kupplungs-Endstellung gebracht wird. Es ist ersichtlich, daß die Erfindung ohne nennenswerten Aufwand dafür Sorge trägt, daß auf einen Synchronisationsverlust während des Schaltens zurückzuführende Geräusche vermieden werden. Insbesondere verursacht die Erfindung keinerlei Vergrößerung des Bauvolumens der herkömmlichen Synchronisiereinrichtungen.

Der Anschlagkörper kann in einfacher Weise von einem in einer axial gerichteten Nut der Schaltmuffe und/oder der Führungsmuffe angeordneten Mitnehmerstein gebildet werden. Wird auch die in Axialrichtung wirkende Verbindung zwischen Schaltmuffe und Synchronisierring durch mindestens einen in einer axial gerichteten Nut der Schaltmuffe und/oder der Führungsmuffe angeordneten Mitnehmerstein gebildet, so können in besonders vorteilhafter Weise jeweils ein den Anschlagkörper bildender und ein die Verbindung zwischen Schaltmuffe und Synchronisierring herstellender Mitnehmerstein in einer gemeinsamen Nut angeordnet sein. Bei einer bevorzugten Ausführungsform der Erfindung sind die beiden in einer gemeinsamen Nut angeordneten Mitnehmersteine in Bezug auf die zwischen ihnen verlaufende Radialebene symmetrisch und weisen an ihren in Bezug auf die Radialebene äußeren Enden einen Vorsprung auf. Entsprechend ist bei dieser Ausführungsform der Erfindung auch der Synchronisierring mit einem Vorsprung versehen, der in den in Umfangsrichtung durch die formschlüssige Verbindung definierten Endlagen des Synchronisierringes nur jeweils dem Vorsprung eines der beiden Mitnehmersteine gegenübersteht. Der besondere Vorteil dieser Ausführungsform besteht darin, daß gleiche Mitnehmersteine zur Herstellung der in Axialrichtung wirkenden Verbindung zwischen Schaltmuffe und Synchronisierring sowie auch als Anschlagkörper Verwendung finden können und jeweils zwei solcher Mitnehmersteine in einer gemeinsamen Nut angeordnet werden können, was die Ausbildung der Schaltmuffe vereinfacht. Besonders einfach und zweckmäßig ist diese Ausführungsform der Erfindung für Schaltgetriebe, bei denen zu beiden Seiten der Schaltmuffe Zahnräder mit Kupplungskörpern und Synchronisierringe angeordnet sind, weil dann die in einer gemeinsamen Nut angeordneten Mitnehmersteine auch in Bezug auf die zur Achse der Schaltmuffe senkrechte Mittelebene symmetrisch ausgebildet sein und wechselseitig auf beide Synchronisierringe wirken können.

Bei einer anderen, besonders vorteilhaften Ausführungsform der Erfindung, die ebenfalls für ein Schaltgetriebe bestimmt ist, bei dem zu beiden Seiten der Schaltmuffe Zahnräder mit Kupplungskörpern und Synchronisierringe angeordnet sind, werden die Mitnehmersteine, welche die in Axialrichtung wirkende Verbindung zwischen Schaltmuffe und Synchronisierring herstellen, von seitlichen Lappen an den zugeordneten Synchronisierringen gebildet, deren Enden jeweils der Flanke des anderen Synchronisierringes mit Abstand gegenüberstehen. Bei dieser Ausführungsform der Erfindung fallen also besondere Mitnehmersteine weg, wodurch die Montage der Synchronisiereinrichtung besonders einfach wird. Außerdem ergeben sich durch diese Ausbildung der Synchronisierringe weitere vorteilhafte Möglichkeiten für die Ausbildung der Synchronisiereinrichtung, beispielsweise die Anordnung eines außenliegenden Bremskonus.

Ein besonderer Vorteil der erfindungsgemäßen Synchronisiereinrichtung besteht darin, daß sie es ermöglicht, die Sperrflächen für die Schaltmuffe an den Flanken der Vorsprünge oder den Lappen der Synchronisierringe anzubringen, und zwar in der Weise, daß sie nicht mit der Innenverzahnung der Schaltkupplung zusammenwirken, die mit der Außenverzahnung des Kupplungskörpers in Eingriff zu bringen ist, sondern mit Gegenflächen, die an den Wänden der in der Schaltmuffe angeordneten Nuten zur Aufnahme der Mitnehmersteine angebracht sind. Die Trennung dieser Sperrflächen von der zur Herstellung der Kupplung dienenden Verzahnung hat den Vorteil, daß beide unabhängig voneinander optimal ausgebildet werden können. Insbesondere kann der Winkel der Sperrflächen in Bezug auf die Axialrichtung größer sein als der entsprechende Winkel an den Enden der miteinander in Eingriff zu bringenden Zähne von Schaltmuffe und Kupplungskörper. Ein kleinerer Winkel erleichtert an den miteinander in Eingriff zu bringenden Zähnen das Einrücken der Verzahnung der Schaltmuffe in die Verzahnung des Kupplungskörpers.

Da bei der erfindungsgemäßen Synchronisiereinrichtung die Sperrflächen am Synchronisierring von der Kupplungsverzahnung unabhängig sind und daher der Synchronisierring selbst keine entsprechende Verzahnung aufzuweisen braucht, ist seine Gestaltung von einer solchen Verzahnung unabhängig. Daher gibt es keinen Grund, den Synchronisierring nicht in gewissen Grenzen gegenüber der Schaltmuffe verdrehbar anzuordnen. So sieht eine bevorzugte Ausführungsform der Erfindung vor, daß der durch die in Umfangsrichtung wirkende, formschlüssige Verbindung zwischen Schaltmuffe und Synchronisierring begrenzte Drehwinkel Θ der Synchronisierringe gegenüber der Schaltmuffe mindestens um eine halbe Teilung α der Zähne von Schaltmuffe und Kupplungskörper größer ist als der durch die Ausdehnung der Sperrflächen bedingte Dehwinkel β. Auch diese Maßnahme trägt dazu bei, den Schaltvorgang sanfter und weitgehend ruckfrei zu gestalten. Nachdem die Synchronisierung eingetreten ist, wird die durch den Synchronisierring bewirkte Sperrung dadurch aufgehoben, daß das Zahnrad mit dem auf dem Gegenkonus des Kupplungskörpers sitzenden Synchronisierring über die schräg stehenden Sperrflächen gegenüber der Schaltmuffe leicht verdreht wird. Wenn dann die angespitzten Zähne der Schaltmuffe auf die ebenfalls an ihren Enden angespitzten Zähne des Kupplungskörpers treffen, muß in aller Regel ein weiteres Verdrehen des Zahnrades mit dem Kupplungskörper gegenüber der Schaltmuffe stattfinden. Die soeben erwähnte Ausgestaltung der Erfindung ermöglicht es dem Synchronisierring, dieser weiteren Drehung zu folgen, ohne daß eine Trennung vom Gegenkonus des Kupplungskörpers erforderlich ist, wenn die Zähne in der Weise aufeinander treffen, daß die weitere Drehung eine Vergrößerung des Abstandes zwischen den Sperrflächen bewirkt, die zuletzt miteinander in Eingriff standen. Das ist statistisch in 50% aller Kupplungsvorgänge der Fall. Nur dann, wenn die Relativdrehung von Kupplungskörper und Schaltmuffe in entgegengesetzter Richtung erfolgen müßte, die von aneinander liegenden Flächen der die Sperrflächen tragenden Körper verhindert wird, muß beim Schalten der Synchronisierring vom Gegenkonus des Kupplungskörpers losgebrochen werden. Damit wird der dadurch bedingte Widerstand beim Schalten, der sich als sogenannter zweiter Druckpunkt äußert und vielfach als störend empfunden wird, in 50% aller Fälle vermieden.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen:

Fig. 1 einen Längsschnitt durch einen Getriebeteil mit einer Synchronisiereinrichtung nach der Erfindung,

Fig. 2 einen Schnitt längs der Linie II–II durch den Getriebeteil nach Fig. 1,

Fig. 3 eine Abwicklung des Getriebeteiles nach Fig. 2 längs der Schnittlinie III–III,

Fig. 4 einen Längsschnitt durch einen weiteren Getriebeteil mit einer Synchronisiereinrichtung nach der Erfindung,

Fig. 5 eine Abwicklung der Anordnung nach Fig. 4 längs der Schnittlinie IV–IV und

Fig. 6 einen Längsschnitt durch einen Getriebeteil ähnlich Fig. 4 mit einer Variante der Synchronisiereinrichtung.

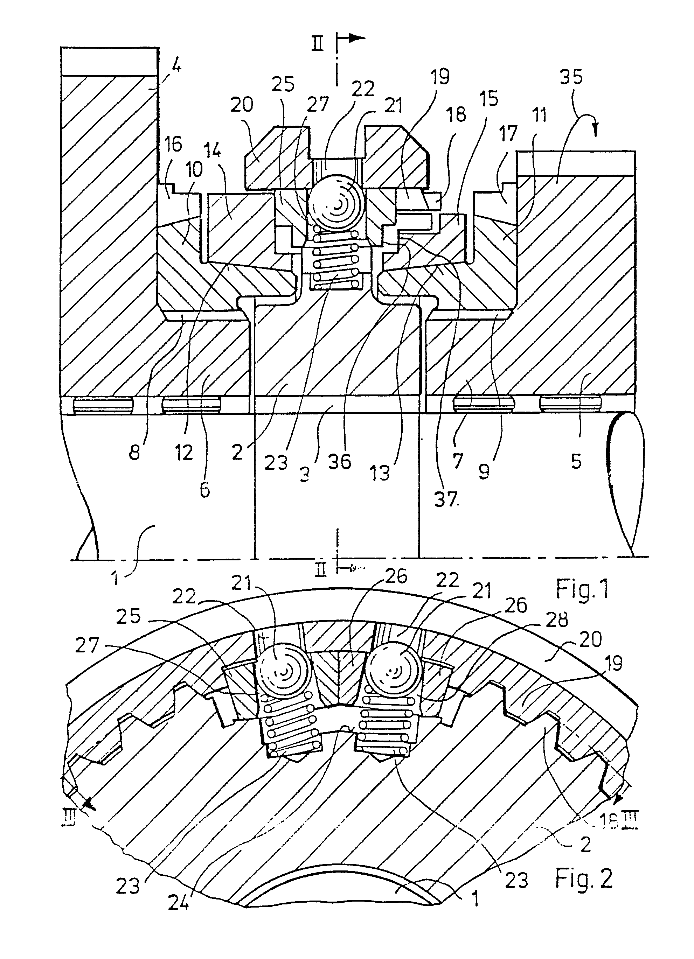

Der in den Fig. 1 bis 3 dargestellte Getriebeteil weist eine Welle 1 auf, auf der eine Führungsmuffe 2 mittels einer Verzahnung 3 drehfest und axial unverschieblich befestigt ist. Zu beiden Seiten neben der Führungsmuffe 2 sind auf der Welle 1 Zahnräder 4, 5 drehbar gelagert, die an ihrer der Führungsmuffe 2 zugewandten Seite eine axiale Verlängerung 6 bzw. 7 mit einer Außenverzahnung 8 bzw. 9 aufweisen, auf die jeweils ein Kupplungskörper 10 bzw. 11 aufgesetzt ist. Die Kupplungskörper 10, 11 greifen mit einer Innenverzahnung in die Außenverzahnung 8 bzw. 9 an den Verlängerungen 6, 7 ein, so daß sie mit den zugeordneten Zahnrädern 4, 5 drehfest verbunden sind. Die Kupplungskörper weisen jeweils eine Kegelfläche auf, die einen Gegenkonus 12 bzw. 13 für jeweils einen Synchronisierring 14 bzw. 15 bildet. Außerdem weisen die Kupplungskörper 10, 11 am Umfang eines an den Gegenkonus 12, 13 angrenzenden Abschnittes jeweils eine Außenverzahnung 16, 17 auf, welche den gleichen Durchmesser und die gleiche Teilung hat wie eine Außenverzahnung 18 am Umfang der Führungsmuffe 2. In diese Verzahnung greift die Innenverzahnung 19 einer Schaltmuffe 20 ein, die in ihrer Ruhestellung zentrisch zur Mittelebene der Führungsmuffe 2 angeordnet ist und in dieser Stellung durch Rastkugeln 21 gehalten ist, die in entsprechende radiale Bohrungen 22 der Schaltmuffe 20 eingreifen. Die Rastkugeln sind zusammen mit sie belastenden Schraubendruckfedern 23 in radialen Ausnehmungen 24 der Führungsmuffe 2 angeordnet.

In den Ausnehmungen 24 der Führungsmuffe 2 befinden sich weiterhin zwei in Umfangsrichtung nebeneinander angeordnete Mitnehmersteine 25, 26, die auch bis in eine Nut zwischen den Zähnen der Innenverzahnung 19 der Schaltmuffe 20 hineinreichen. Die beiden Mitnehmersteine 25, 26 weisen jeweils eine zentrale Bohrung 27, 28 auf, die jeweils von einer der Rastkugeln 21 und der zugeordneten Schraubendruckfeder 23 durchsetzt werden. Auf diese Weise sind die Mitnehmersteine 25, 26 in Axialrichtung der Anordnung mit der Schaltmuffe 20 durch eine Federrastung verbunden. In Umfangsrichtung der Schaltmuffe 20 passen die beiden Mitnehmersteine genau in die zu ihrer Aufnahme vorgesehene Nut in der Innenverzahnung 19, so daß sie in Umfangsrichtung gegenüber den beiden Muffen 2, 20 spielfrei gehalten sind. Die beiden Mitnehmersteine 25, 26 sind völlig gleich ausgebildet, jedoch in Umfangsrichtung zu einer Radialebene des Getriebeteiles spiegelbildlich angeordnet. Jeweils an ihren in Umfangsrichtung äußeren Abschnitten weisen die Führungssteine 25, 26 über ihre Seitenflächen axial vorstehende Vorsprünge 29 auf. Diese Vorsprünge erstrecken sich in Umfangsrichtung etwa über die halbe Länge der Mitnehmersteine.

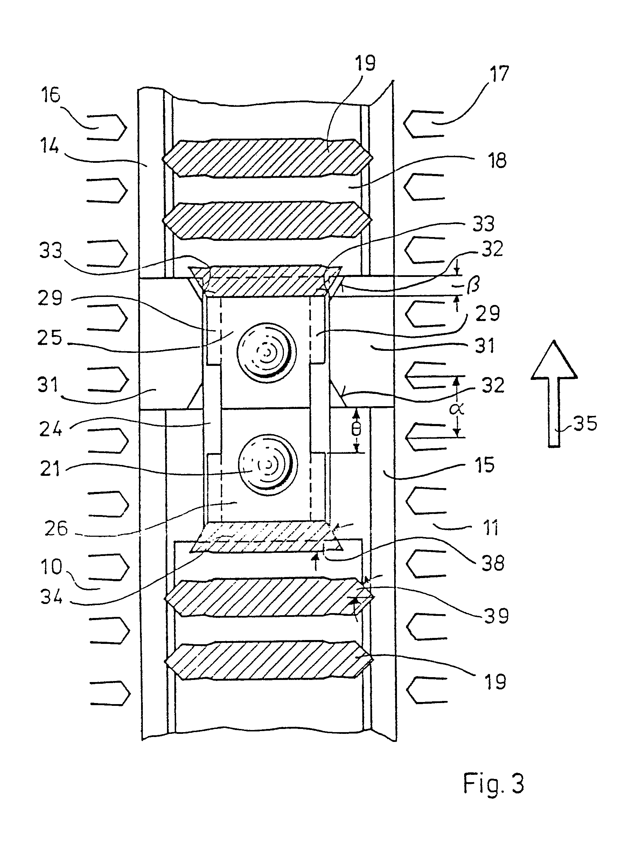

Die Synchronisierringe 14, 15 weisen jeweils einen Ansatz 31 auf, der in Axialrichtung bis in die Ausnehmung 24 der Führungsmuffe 2 und in Radialrichtung bis in die Aussparung in der Innenverzahnung der Schaltmuffe 20 hineinreicht. Die Ansätze 31 weisen an ihren den Mitnehmersteinen 25, 26 zugewandten Stirnflächen Abschrägungen auf, die Sperrflächen 32 bilden, mit denen Gegenflächen 33 an den Enden der die Aussparung in der Schaltmuffe 20 begrenzenden Zähnen 34 zusammenwirken, die gegenüber den übrigen Zähnen der Innenverzahnung 19 der Schaltmuffe 20 verkürzt ausgebildet sind. Die Synchronisierringe 14, 15 sind gegenüber Führungsmuffe 2 und Schaltmuffe 20 in Umfangsrichtung verdrehbar, soweit es die Ausnehmung 24 in der Führungsmuffe 2 zuläßt, in welchem die Ansätze 31 der Synchronisierringe 14, 15 eingreifen. Die Anordnung wird so getroffen, daß die Synchronisierringe 14, 15 in ihren beiden Endstellungen, in denen sie mit einer ihrer Sperrflächen 32 eine Gegenfläche 33 an der Schaltmuffe 20 gegenüberstehen, auch mit ihrer axialen Stirnfläche dem Vorsprung 29 an dem benachbarten Mitnehmerstein 25 bzw. 26 gegenüberstehen. Dabei reichen die Ansätze 31 in Umfangsrichtung der Anordnung bis in die Radialebene, in welcher die benachbarten Mitnehmersteine 25, 26 aneinanderstoßen. In den Fig. 2 und 3 sind die beiden möglichen Endstellungen der Synchronisierringe 14, 15 dargestellt.

Wird zum Kuppeln eines der Zahnräder in der bei solchen Getrieben üblichen Weise die Schaltmuffe 20 axial verschoben, werden die Mitnehmersteine 25, 26 durch die von den federbelasteten Rastkugeln 21 gebildete Federrastung mitgenommen. Dadurch kommt einer der Mitnehmersteine 25, 26 mit der Stirnfläche seines Vorsprunges 29 an der Stirnfläche des Ansatzes 31 an dem in Verschieberichtung benachbarten Synchronisierring zur Anlage. Um die weitere Beschreibung zu erleichtern, sei angenommen, daß die Schaltmuffe 20 in den Fig. 1 und 3 nach rechts in Richtung auf das Zahnrad 5 verschoben wird. Ferner sei angenommen, daß dieses Zahnrad 5 in Richtung des Pfeiles 35 schneller umläuft als die Welle 1 mit Führungs- und Schaltmuffe.

Wird demnach die Schaltmuffe bei der in den Fig. 1 und 3 dargestellten Getriebeanordnung nach rechts verschoben, drückt der über die Federrastung mitgenommene Mitnehmerstein 25 mit seinem Vorsprung 29 gegen den Ansatz 31 des rechten Synchronisierringes 15. Dieser Synchronisierring wird daher mit dem Gegenkonus 13 am Kupplungskörper 11 des Zahnrades 5 in Eingriff gebracht. Dadurch wird der Synchronisierring 15 in Richtung des Pfeiles 35 mitgenommen, bis sein Ansatz 31 an der Flanke der Ausnehmung 24 in der Führungsmuffe 2 zur Anlage kommt. Beim weiteren Vorschieben der Schaltmuffe 20 kommt der dem Ansatz 31 benachbarte Zahn 34 der Schaltmuffe 20 mit seiner Gegenfläche 33 an der Sperrfläche 32 des Ansatzes 31 zur Anlage. Dadurch wird eine Weiterbewegung der Schaltmuffe 20 verhindert und gleichzeitig von der Schaltmuffe 20 eine Axialkraft auf den Synchronisierring 15 ausgeübt, durch welche vom Synchronisierring 15 auf den Gegenkonus 13 des Kupplungskörpers 11 eine Bremskraft ausgeübt wird, durch die ein Gleichlauf zwischen dem Zahnrad 5 und der Welle 1 mit Führungsmuffe 2 und Schaltmuffe 20 erzwungen wird. Nach dem dieser Gleichlauf hergestellt ist, wird eine weitere Axialverschiebung der Schaltmuffe 20 möglich, weil die schräge Gegenfläche 33 am Zahn 34 der Schaltmuffe ein Auslenken des Ansatzes 31 am Synchronisierring 15 unter leichtem Verdrehen von Zahnrad 5 mit Kupplungskörper 11 gegenüber der Welle 1 bewirkt, da der Synchronisierring 15 mit dem Gegenkonus 12 am Kupplungskörper 11 in Reibungsschluß steht. Bei der axialen Weiterbewegung der Schaltmuffe 20 wird die durch die Rastkugel 21 hergestellte Verbindung zum Mitnehmerstein 25 gelöst, so daß die Schaltmuffe 20 unabhängig vom Mitnehmerstein 25 weiterbewegt werden kann.

Nachdem die Gegenfläche 33 am Zahn 34 mit der Sperrfläche 32 am Ansatz des Synchronisierringes 15 außer Eingriff gekommen ist und auch die Federrastung zwischen Mitnehmerstein 25 und der Schaltmuffe 20 gelöst worden ist, wird insoweit auf den Synchronisierring 15 keine Axialkraft mehr ausgeübt, welche den Synchronisierring 15 in Reibungsschluß mit dem Gegenkonus 13 am Kupplungskörper 11 hält. Es könnte sich daher der Synchronisierring 15 vom Gegenkonus 13 lösen und ein Verlust der vorher hergestellten Synchronisierung eintreten. Diese Gefahr ist dann besonders groß, wenn der nicht angetriebene Radsatz starken Bremskräften unterworfen ist, wie beispielsweise durch die hohe Viskosität des Getriebeöles bei noch kaltem Getriebe. Es findet dann wieder eine Relativbewegung zwischen der Innenverzahnung 19 der Schaltmuffe und der Außenverzahnung 17 am Kupplungskörper 11 statt, die beim Einrücken des Ganges das Aufeinanderkratzen der Zähne mit entsprechender Beschädigungsgefahr und Geräuschbildung zur Folge hat.

Bei dem dargestellten Getriebe wird jedoch diese Gefahr dadurch vermieden, daß dann, wenn nach Herstellen der Synchronisation die Sperrfläche 32 am Synchronisierring 15 aus dem Bereich der Gegenfläche 33 ausgelenkt wird, während dieses Auslenkens eine Flanke 36 des anderen Mitnehmersteines 26 an einer zugeordneten Innenfläche 37 des Synchronisierringes 15 zur Anlage kommt und damit nun ihrerseits eine Axialkraft auf den Synchronisierring 15 ausübt, die ausreicht, um den Reibungsschluß zwischen Synchronisierring 15 und Kupplungskörper 11 aufrechtzuerhalten, bis die Innenverzahnung 19 der Schaltmuffe 20 in die Außenverzahnung 9 der Kupplungskörper eintritt. Die mittels der gefederten Rastkugel 21 bewirkte Federrastung zwischen Mitnehmerstein 26 und Schaltmuffe 20 ist in einem gewissen Bereich der Axialverschiebung der Schaltmuffe 20 wirksam, der ausreicht, um unter Fortwirkung der axialen Belastung des Synchronisierringes 15 die Innenverzahnung 19 der Schaltmuffe mit dem Kupplungskörper 11 in Eingriff zu bringen. Daher ist mittels der erfindungsgemäßen Synchronisiereinrichtung auch unter ungünstigen Umständen ein völlig geräuschloses Schalten möglich.

Ein besonderer Vorteil der dargestellten Ausführungsform der Synchronisiereinrichtung besteht noch darin, daß der Winkel 38, den die Gegenflächen 33 und entsprechend auch die Sperrflächen 32 am Synchronisierring mit der Axialrichtung bilden, von dem Winkel 39 verschieden sein kann, der sich an den Enden der Zähne der Innenverzahnung 19 der Schaltmuffe 20 und entsprechend auch an den Enden der Zähne der Außenverzahnung 17 des Kupplungskörpers 11 befinden. Es können daher beide Winkel 38, 39 unabhängig voneinander optimal gewählt werden, um einerseits eine möglichst gute Sperrwirkung zu erzielen, ohne daß jedoch schon eine Selbsthemmung in Umfangsrichtung der Synchronisiereinrichtung auftritt, und andererseits ein besonders gutes Ineinanderfügen der Verzahnungen zu gewährleisten, wozu kleine Winkel 39 von Vorteil sind.

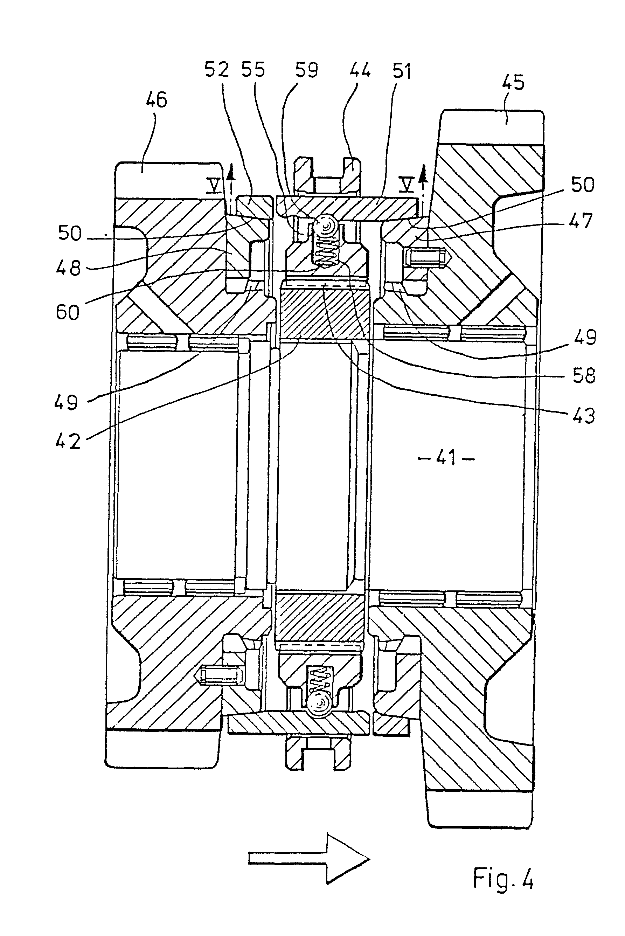

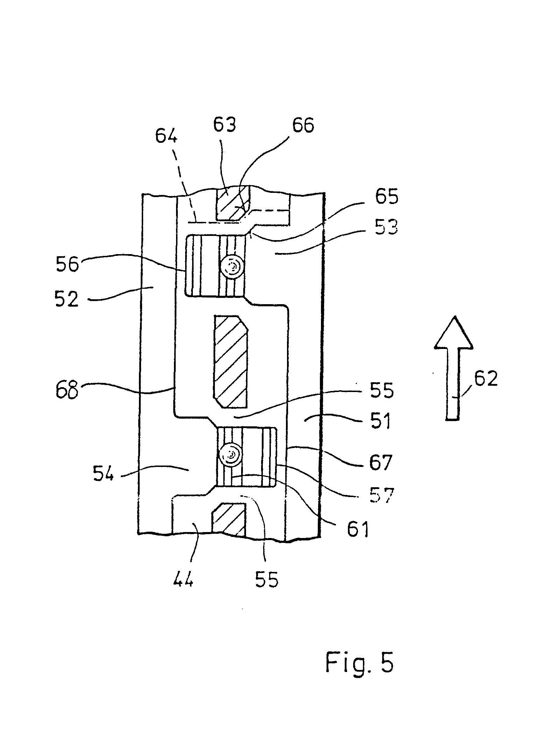

Bei der Ausführungsform nach den Fig. 4 und 5 ist wiederum auf einer Welle 41 eine Führungsmuffe 42 drehfest angeordnet, die eine Außenverzahnung 43 aufweist, in welche die Innenverzahnung einer Schaltmuffe 44 eingreift, welche die Führungsmuffe 42 konzentrisch umgibt und in Axialrichtung gegenüber der Führungsmuffe verschieblich ist. Zu beiden Seiten der Muffen sind wiederum auf der Welle 41 zwei Zahnräder 45, 46 drehbar gelagert, die an ihren den Muffen zugewandten Seiten jeweils einen Reibring 47 bzw. 48 tragen. Die Außenverzahnung 43 der Führungsmuffe hat den gleichen Durchmesser und die gleiche Teilung wie eine Außenverzahnung 49 an den Zahnrädern 45, 46. Diese Reibringe haben je eine in Bezug auf die Außenverzahnung 49 außen liegende Kegelfläche, welche den Gegenkonus 50 für Synchronisierringe 51, 52 bilden.

Wie insbesondere aus Fig. 5 ersichtlich, sind bei dieser Ausführungsform der Erfindung an den einander zugewandten Flanken der Synchronisierringe 51, 52 Lappen 53 bzw. 54 angebracht, die sich axial durch Aussparungen 55 in der Schaltmuffe 44 hindurch erstrecken. Die Stirnflächen 56, 57 dieser Lappen 53, 54 stehen jeweils der zugewandten Stirnfläche des benachbarten Synchronisierringes 51, 52 mit Abstand gegenüber.

Die Aussparungen 55 in der Schaltmuffe 44 lassen eine Relativbewegung der Synchronisierringe 51, 52 gegenüber der Schaltmuffe 44 sowohl in Umfangsrichtung als auch in Axialrichtung der Anordnung zu. Dabei werden die Synchronisierringe 51, 52 in Axialrichtung wiederum durch eine Federrastung in einer Soll-Lage gehalten, die eine in einer Radialbohrung 58 der Schaltmuffe angeordnete Rastkugel 59 umfaßt, die von einer Schraubendruckfeder 60 belastet ist und in eine sich in Umfangsrichtung erstreckende Nut 61 an der Innenseite des jeweiligen Lappens 53 bzw. 54 eingreift.

Wenn bei dieser Ausführungsform der Erfindung in der gleichen Weise, wie vorstehend beschrieben, die Schaltmuffe bei der in der Zeichnung dargestellten Anordnung nach rechts bewegt wird, wird der rechte Synchronisierring 51 über die Federrastung mittels der Rastkugel 59 mitgenommen und mit dem Gegenkonus 50 des rechten Reibringes 47 in Eingriff gebracht. Durch das dabei entstehende Reibmoment wird unter den gleichen Bedingungen wie bei dem vorhergehenden Ausführungsbeispiel der Synchronisierring 51 gegenüber der Schaltmuffe 44 in Richtung des Pfeiles 62 verdreht, bis der Lappen 53 an dem die entsprechende Aussparung 55 begrenzenden Steg 63 zur Anlage kommt, wie es in Fig. 5 durch die gestrichelte Linie 64 angedeutet ist. Dabei kommt wiederum eine der am Lappen 53 angebrachten Sperrflächen 65 in den Bereich einer Gegenfläche 66 am Steg 63. Die auf die Schaltmuffe 44 ausgeübte Axialkraft bewirkt wiederum ein Abbremsen des Reibringes 47 mit dem Zahnrad 45 und damit ein Herstellen der Synchronisation, wonach die Schaltmuffe 44 unter leichtem Verdrehen des Synchronisierringes 51 mit dem Zahnrad 45 an der Sperrfläche 65 vorbeibewegt werden kann. Während die Gegenfläche 66 an der Schaltmuffe 44 mit der Sperrfläche 65 am Synchronisierring 51 außer Eingriff kommt und daher die auf den Synchronisierring 51 ausgeübte Axialkraft entfällt, kommt die Stirnfläche 57 am Lappen 54 des anderen Synchronisierringes 52 an der inneren Flanke 67 des Synchronisierringes 51 zur Anlage und überträgt dadurch wiederum eine Axialkraft auf den Synchronisierring 51, weil der andere Synchronisierring 52 infolge seiner durch die Federrastung hergestellten Verbindung mit der Schaltmuffe deren Bewegung gefolgt ist. In ähnlicher Weise kommt auch die innere Flanke 68 des in der Zeichnung linken Synchronisierringes 52 an der Stirnfläche 56 des Lappens 53 des Synchronisierringes 51 zur Anlage, der mit dem Gegenkonus 50 des zu kuppelnden Zahnrades 45 in Eingriff steht. Damit wird über die mittels der gefederten Rastkugeln 59 hergestellten Verbindung auf den Synchronisierring 51 eine Axialkraft ausgeübt, bis die Innenverzahnung der Schaltmuffe 44 die Außenverzahnung 49 am Zahnrad 45 erreicht hat und in diese eingreift. Auch hier ist wieder auf diese Weise ein völlig ruckfreies Schalten gewährleistet.

Die zuletzt beschriebene Ausführungsform der Erfindung kann so betrachtet werden, als ob Mitnehmersteine in Form der Lappen 53, 54 mit dem zugeordneten Synchronisierring 51 bzw. 52 zu einem einstückigen Bauteil verbunden worden sind. Dabei ist auch hier wieder von Vorteil, daß die Sperrflächen 65 mit ihren Gegenflächen 66 von der eigentlichen Verzahnung getrennt sind, die zur Herstellung der Verbindung zwischen Schaltmuffe und Zahnrad dienen, so daß in beiden Fällen wieder unterschiedliche und für die verschiedenen Zwecke optimale Winkel verwendet werden können. Auch hier gilt wieder, daß der Winkel zwischen den Sperrflächen 65 und der Axialrichtung größer sein sollte als der entsprechende Winkel an den Enden der miteinander in Eingriff zu bringenden Zähne.

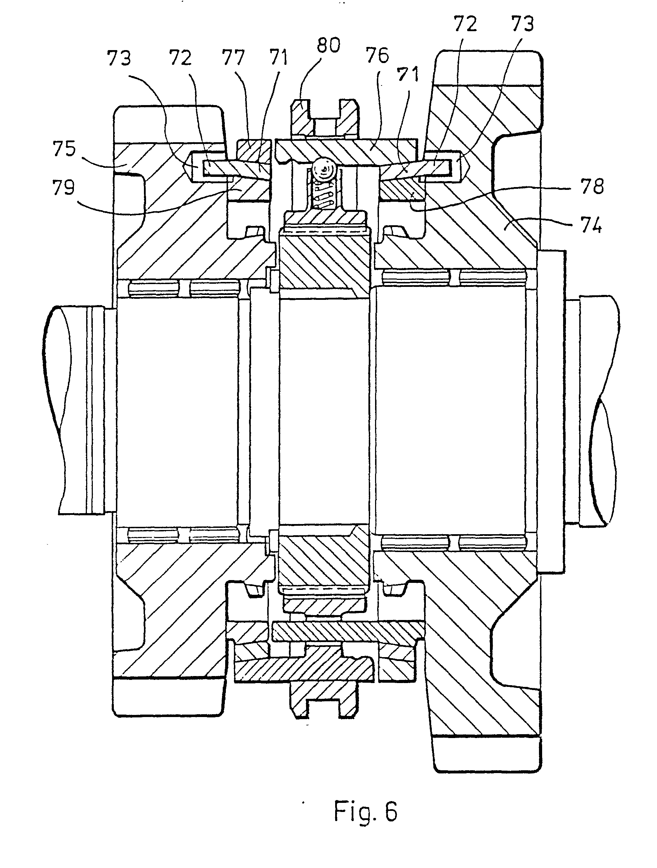

Eine Besonderheit der zuletzt beschriebenen Ausführungsform der Erfindung besteht darin, daß die Lagerung der Synchronisierringe mit Hilfe von Lappen innerhalb von Aussparungen der Schaltmuffe die Möglichkeit bietet, die der Synchronisation dienenden Kegelflächen mit einem erheblich größeren Durchmesser auszubilden als die der festen Kupplung dienende Verzahnung. Auf diese Weise wird der Synchronisierungsringdurchmesser bedeutend vergrößert, wodurch der zum Synchronisieren erforderliche Kraftaufwand geringer wird, oder der Synchronisiervorgang schneller erfolgen kann. Außerdem sind große Flächen zum Abführen der beim Synchronisieren auftretenden Reibungswärme günstig. Bei der in Fig. 6 dargestellten Ausführungsform ist dieser Effekt noch dadurch vergrößert, daß anstelle von Kupplungskörpern Konusringe 71 Verwendung finden, die an ihrem jeweils äußeren Rand Nasen 72 aufweisen, mit denen sie in Bohrungen 73 an den zugewandten Stirnflächen der zu kuppelnden Zahnräder eingreifen. Mit den äußeren Kegelflächen der Konusringe 71 stehen wiederum Synchronisierringe 76, 77 in Eingriff, die ebenso ausgebildet und gehaltert sind wie die Synchronisierringe 51, 52 bei der Ausführungsform nach den Fig. 4 und 5. Zusätzlich sind Synchronisierringe 78, 79 vorhanden, die mit den inneren Kegelflächen des Konusringes 71 in Eingriff stehen. Zum Unterschied von den äußeren Synchronisierringen 76, 77 sind jedoch diese Synchronisierringe mit der Schaltmuffe 80 nicht durch eine Federrastung verbunden, und es weisen diese Synchronisierringe auch keine mit Gegenflächen an der Schaltmuffe 80 zusammenwirkende Sperrflächen auf. Die innen liegenden Synchronisierringe 78, 79 stützen sich stattdessen mit ihren jeweils außen liegenden Stirnflächen an einer entsprechenden Stirnfläche des benachbarten Zahnrades 74 bzw. 75 ab. Es versteht sich, daß die Erfindung auch bei Anordnungen anwendbar ist, die eine noch größere Anzahl von Reibflächen aufweisen, um den Synchronisationsvorgang zu erleichtern.

Bei den vorstehend behandelten Ausführungsbeispielen ist der durch Aussparungen in der Führungs- oder Schaltmuffe begrenzte Drehwinkel Θ der Synchronisierringe größer als der halbe Teilungswinkel α der miteinander in Eingriff zu bringenden Verzahnungen an Schaltmuffe und Kupplungskörper zuzüglich des durch die Ausdehnung der Sperrflächen bedingten Drehwinkels β. Diese Tatsache ist zwar nur aus Fig. 3 der Zeichnung ersichtlich, gilt aber auch für die anderen Ausführungsbeispiele. Wie bereits oben behandelt, wird nach Erreichen des Synchronisationszustandes beim weiteren Einrücken der Schaltmuffe 20 der Synchronisierring 15 mit dem durch Reibungsschluß gekoppelten Kupplungskörper 11 gegenüber der Schaltmuffe 20 soweit verdreht, daß die Schaltmuffe 20 mit dem die Gegenflächen 33 tragenden Zahn 34 an dem gegenüberliegenden Ansatz 31 vorbeigleiten kann. Anschließend müssen die Zähne 34 der Innenverzahnung 19 der Schaltmuffe 20 zwischen die Zähne der Außenverzahnung 16 des benachbarten Kupplungskörpers 11 eingeführt werden. Wenn die beiden Verzahnungen nicht genau zueinander auf Lücke stehen, muß wiederum über die Schrägflächen an den angespitzten Zähnen ein Verdrehen des Kupplungskörpers 11 gegenüber der Schaltmuffe 20 erfolgen. Das relativ große Spiel der Synchronisierringe 14, 15 gegenüber der Schaltmuffe 20 ermöglichen ein solches Drehen im Sinne einer Vergrößerung des Abstandes zwischen Zahn 34 und Ansatz 31, ohne daß dazu der Synchronisierring 15 vom Gegenkonus 13 des Kupplungskörpers 11 gelöst werden müßte. Hierdurch wird ein völlig ruckfreies Durchschalten möglich. Allerdings ergibt sich dieser Zustand nur bei 50% aller Schaltvorgänge, weil es statistisch ebenso häufig vorkommt, daß die Flanken an den Stirnseiten der Verzahnungen so aufeinander treffen, daß durch die Drehung des Synchronisierringes 15 der Ansatz 31 an den benachbarten Zahn 34 stärker angenähert werden müßte, was jedoch nicht geht, weil bereits der Ansatz 31 an der Seitenfläche dieses Zahnes 34 anliegt. In diesem Falle kann die notwendige Verdrehung der Außenverzahnung 17 des Kupplungskörpers 11 gegenüber der Innenverzahnung 19 der Schaltmuffe 20 nur dadurch erfolgen, daß der Synchronisierring 15 vom Gegenkonus 13 des Kupplungskörpers 11 getrennt wird, wozu ein zusätzlicher Kraftaufwand notwendig ist. Es bedeutet jedoch einen erheblichen Fortschritt, daß in 50% aller Fälle dieser häufig als sehr störend empfundene, zweite Druckpunkt beim Schalten nicht mehr auftritt.

Es versteht sich, das die in Form der Mitnehmersteine oder Lappen an den Synchronisierringen vorgesehenen Anschlagkörper an mehreren Stellen längs des Umfanges der Synchronisiereinrichtung angebracht sein können. Vorzugsweise sind jeweils drei solcher Anordnungen längs des Umfanges der Führungs- und Schaltmuffen vorgesehen. Endlich versteht es sich auch, daß die Erfindung nicht auf die dargestellten Ausführungsbeispiele beschränkt ist, sondern zur axialen Belastung der Synchronisierringe Anschlagkörper verschiedenster Art vorgesehen werden können, die in Axialrichtung über eine Federrastung mit der Schaltmuffe in Verbindung stehen und dafür sorgen, daß sich der Synchronisierring von dem Gegenkonus nicht lösen kann, bevor nicht die den Kraftschluß zwischen der Führungsmuffe und dem zu kuppelnden Zahnrad dienenden Verzahnungen miteinander in Eingriff gebracht worden sind.

**Patentansprüche**

1. Synchronisiereinrichtung für Schaltkupplungen, insbesondere von Schaltgetrieben für Kraftfahrzeuge, mit mindestens einem durch axiales Verschieben einer mit einer Welle (1; 41) über eine Führungsmuffe (2; 42) drehstarr verbundenen Schaltmuffe (20; 44) mit Innenverzahnung (19) in den Kraftfluß ein- bzw. aus ihm ausschaltbaren Räderpaar, dessen mit der Schaltmuffe (20; 44) gleichachsiges Zahnrad (5; 45) eine Außenverzahnung (17; 49) aufweist, sowie mit einem Synchronisierring (15; 51), der in Umfangsrichtung mit der Schaltmuffe (20; 44) in formschlüssiger und mit dem Zahnrad (5; 45) in reibschlüssiger Verbindung steht, wobei eine kraftschlüssige Verbindung in Axialrichtung zwischen dem Synchronisierring (15; 51) und der Schaltmuffe (20; 44) über eine erste Federrastanordnung (21, 22, 23; 58, 59, 60) und über einen ersten Anschlagkörper (25; 53) herstellbar ist, und der Synchronisierring (15; 51) Sperrflächen (32; 66) für die Schaltmuffe (20; 44) aufweist, die ein Ineingriffkommen der Innenverzahnung (19) der Schaltmuffe (20; 44) mit der Außenverzahnung (17; 49) erst bei Synchrondrehzahl zulassen, dadurch gekennzeichnet, daß ferner mindestens ein zweiter Anschlagkörper (26; 54) und eine zweite Federrastanordnung (21, 22, 23; 58, 59, 60) vorgesehen sind, über die ebenfalls eine kraftschlüssige Verbindung in Axialrichtung zwischen dem Synchronisierring (15; 51) und der Schaltmuffe (20; 44) herstellbar ist, und daß die Anschlagkörper (25, 26; 53, 54) eine solche axiale Abmessung aufweisen, daß der zweite Anschlagkörper (26; 54) mit einer als Axialanschlag wirkenden Stirnfläche (36; 57) einen Abstand von einer Gegenfläche (37; 67) des Synchronisierrings (15; 51) hat, wenn die kraftschlüssige Verbindung über den ersten Anschlagkörper (25; 53) hergestellt wird.

2. Synchronisiereinrichtung nach Anspruch 1, dadurch gekennzeichnet, daß mindestens einer der Anschlagkörper von einem in einer axial gerichteten Nut (24) der Schaltmuffe (19) und/oder der Führungsmuffe (2) angeordneten Mitnehmerstein (25, 26) gebildet wird.

3. Synchronisiereinrichtung nach Anspruch 2, dadurch gekennzeichnet, daß den ersten und den zweiten Anschlagkörper bildende Mitnehmersteine (25, 26) in einer gemeinsamen Nut (24) angeordnet sind.

4. Synchronisiereinrichtung nach Anspruch 3, dadurch gekennzeichnet, daß die beiden in einer gemeinsamen Nut (24) angeordneten Mitnehmersteine (25, 26) gleich und spiegelbildlich angeordnet sind und an ihren in Umfangsrichtung äußeren Enden je einen Vorsprung (29) aufweisen und daß der Synchronisierring (14, 15) einen Ansatz (31) aufweist, der in dem in Umfangsrichtung durch die Sperrverzahnung definierten Winkelbereich (β) jeweils dem Vorsprung (29) nur eines der beiden Mitnehmersteine (25, 26) gegenübersteht.

5. Synchronisiereinrichtung nach Anspruch 1 für ein Schaltgetriebe, bei dem zu beiden Seiten der Schaltmuffe (44) Zahnräder (45, 46) mit Kupplungskörpern (47, 48) und Synchronisierringe (51, 52) angeordnet sind, dadurch gekennzeichnet, daß die Anschlagkörper von seitlichen Lappen (53, 54) an den zugeordneten Synchronisierringen (51, 52) gebildet werden, deren Enden (56, 47) jeweils der Flanke (67, 68) des anderen Synchronisierringes (51, 52) mit Abstand gegenüberstehen.

6. Synchronisiereinrichtung nach Anspruch 4 oder 5, dadurch gekennzeichnet, daß die Sperrflächen (32; 65) nur an den Flanken der Ansätze (31) bzw. Lappen (53, 54) der Synchronisierringe (14, 15; 51, 52) angebracht sind und mit Gegenflächen (33; 66) zusammenwirken, die an den Wänden der in der Schaltmuffe (20; 44) angeordneten Nuten (24; 55) zur Aufnahme der Anschlagkörper (26; 54) angebracht sind.

7. Synchronisiereinrichtung nach Anspruch 6, dadurch gekennzeichnet, daß der Winkel (38) der Sperrflächen (33) in Bezug auf die Axialrichtung größer ist als der entsprechende Winkel (39) an den Enden der miteinander in Eingriff zu bringenden Zähne von Schaltmuffe (20) und Zahnrad (5).

8. Synchronisiereinrichtung nach einem der vorhergehenden Ansprüche, dadurch gekennzeichnet, daß der durch die in Umfangsrichtung wirkende, formschlüssige Verbindung zwischen Schaltmuffe (20) und Synchronisierring (14, 15) begrenzte Drehwinkel ($\Theta$) der Synchronisierringe (14, 15) gegenüber der Schaltmuffe (20) mindestens um die Hälfte des Teilungswinkels ($\alpha$) der Zähne (19) von Schaltmuffe (20) und Zahnrad (4, 5) größer ist als der durch die Ausdehnung der Sperrflächen (32, 33) bedingte Drehwinkel ($\beta$).

**Claims**

1. Synchronizing device for shift clutches, in particular for shift transmissions for motor vehicles, comprising at least one pair of gears which can be shift into or out of the line of power transmission by axial displacement of a shift sleeve (20; 44) provided with an internal toothing (19), said shift sleeve (20; 44) is connected via a guide sleeve (2; 42) to a shaft (1; 41), so as to rotate with the latter, the one gear (5; 45) of said pair of gears which is coaxially arranged with the shift sleeve (20; 44) is provided with an external toothing (17; 49), and further comprising a synchronizing ring (15; 51) being in the circumferential direction in form-locking engagement with the shift sleeve (20; 44) and in frictional engagement with the gear (5; 45), wherein a power transmitting connection in axial direction between the synchronizing ring (15; 51) and the shift sleeve (20; 44) is providable via first spring detent means (21, 22, 23; 58, 59, 60) and via a first stop body (25; 53), and wherein the synchronizing ring (15; 51) is provided with check faces (32; 66) coacting with the shift means (20; 44), said check faces permit an engagement of the internal toothing (19) of the shift sleeve (20; 44) with the external toothing (17; 49) only at synchronous speed, characterized in that, further at least a second stop body (26; 54) and second spring detent means (21, 22, 23; 58, 59, 60) are provided, via which a power transmitting connection in axial direction between the synchronizing ring (15; 51) and the shift sleeve (20; 44) is providable too, and in that the stop bodies (25, 26; 53, 54) are of such axial extent that, if the power transmitting connection is provided via the first stop body (25; 35), the second stop body (26; 54) is spaced apart from a counterface (37; 67) of the synchronizing ring (15; 51) with its facial face (36; 57) serving as an axial stop.

2. Synchronizing device according to claim 1, characterized in that at least one of said stop bodies is realized by a dog (25, 26) disposed within an axially directed groove (24) in the shift sleeve (19) and/or in the guide sleeve (2).

3. Synchronizing device according to claim 2, characterized in that the dogs (25, 26) realizing the first and second stop bodies are disposed within a common groove (24).

4. Synchronizing device according to claim 3, characterized in that the two dogs (25, 26) disposed within a common groove (24) are arranged identically and symmetrically and are each provided with a projection (29) at its outer ends in circumferential direction, and in that the synchronizing ring (14, 15) is provided with a projection (31) facing the projection (29) of only one of the two dogs (25, 26) in an angle area (β) defined in circumferential direction by the check toothing.

5. Synchronizing device according to claim 1 for a transmission in which gears (45, 46) having clutch bodies (47, 48) and synchronizing rings (51, 52) are arranged on both sides of the shift sleeve (44), characterized in that the stop bodies are formed by lateral lugs (53, 54) on the coacting synchronizing rings (51, 52), whose ends (56, 57) are located opposite, but at a certain distance from the flank (67, 68) of the respective other synchronizing ring (51, 52).

6. Synchronizing device according to claim 4 or 5, characterized in that the check faces (32; 65) are provided only on the flanks of the protections (31) and lugs (53, 54) of the synchronizing rings (14, 15; 51, 52) respectively and coact with counterfaces (33; 66) provided on the walls of the grooves (24; 55) arranged in the shift sleeve (20; 44) for receiving the stop bodies (26; 54).

7. Synchronizing device according to claim 6, characterized in that the angle (38) of the check faces (33) in relation to the axial direction is greater than the corresponding angle (39) at the ends of the teeth of the shift sleeve (20) and gear (5) to be brought into engagement.

8. Synchronizing device according to any of the preceding claims, characterized in that the angle of rotation (Θ) of the synchronizing rings (14, 15) relative to the shift sleeve (20), which angle of rotation (Θ) is limited by the form-locking connection acting in the circumferential direction between the shift sleeve (20) and the synchronizing rings (14, 15), is by at least one half of the angular pitch (α) of the teeth (19) of the shift sleeve (20) and the gear (4, 5) greater than the angle of rotation (β) determined by the extension of the check faces (32, 33).

## Revendications

1. Dispositif de synchronisation pour embrayages de changement de vitesse, notamment de boîtes de vitesses pour véhicules automobiles, avec au moins une paire de roues dentées qui peut être respectivement engagée dans la transmission de mouvement ou désengagée de cette dernière par le coulissement axial d'un crabot (20;

44) muni d'une denture intérieure (19) et assemblé rigidement en rotation à un arbre (1; 41) par l'intermédiaire d'une douille de guidage (2; 42), paire de roues dont la roue dentée (5; 45) de même axe que le crabot (20; 44) présente une denture extérieure (17; 49), et avec une bague-synchro (15, 51) qui est périphériquement assemblée au crabot (20; 44) par engagement positif et à la roue dentée (5; 45) par friction, un assemblage par adhérence pouvant être réalisé dans le sens axial entre la bague-synchro (15; 51) et le crabot (20; 44) par l'intermédiaire d'un premier ensemble de verrous à ressorts (21, 22, 23; 58, 59, 60) et par l'intermédiaire d'un premier corps de butée (25; 53), et la bague-synchro (15; 51) présentant des faces de verrouillage (32; 66) pour le crabot (20; 44), qui n'autorisent un engrènement de la denture intérieure (19) du crabot (20; 44) avec la denture extérieure (17; 49) qu'à l'atteinte du régime synchrone, caractérisé en ce qu'il est prévu, en outre, au moins un deuxième corps de butée (26; 54) et un deuxième ensemble de verrous à ressorts (21, 22, 23; 58, 59, 60), par l'intermédiaire desquels peut également être réalisé un assemblage par adhérence dans le sens axial entre la bague-synchro (15; 51) et le crabot (20; 44), et en ce que les corps de butée (25, 26; 53, 54) présentent une dimension axiale telle que le deuxième corps de butée (26; 54) est, par une face frontale (36; 57) jouant le rôle de butée axiale, distant d'une face complémentaire (37; 67) de la bague-synchro (15; 51), lorsque l'assemblage par adhérence est réalisé par l'intermédiaire du premier corps de butée (25; 53).

2. Dispositif de synchronisation selon la revendication 1, caractérisé en ce qu'au moins un des corps de butée est formé par un taquet entraîneur (25, 26) disposé dans une rainure à orientation axiale (14) du crabot (19) et/ou de la douille de guidage (2).

3. Dispositif de synchronisation selon la revendication 2, caractérisé en ce que les taquets entraîneurs (25, 26) constituant le premier et le deuxième corps de butée sont disposés dans une rainure commune (24).

4. Dispositif de synchronisation selon la revendication 3, caractérisé en ce que les deux taquets entraîneurs (25, 26) disposés dans une rainure commune (24) sont identiques et disposés symétriquement, et présentent à leurs extrémités périphériquement extérieures un épaulement respectif (29), et en ce que la bague-synchro (14, 15) présente un appendice (31) qui, dans la plage angulaire (β) définie dans le sens périphérique par la denture de verrouillage, n'est respectivement en vis-à-vis que de l'épaulement (29) d'un des deux taquets entraîneurs (25, 26).

5. Dispositif de synchronisation selon la revendication 1 pour une boîte de vitesses, dans laquelle des roues dentées (45, 46) avec des corps d'embrayage (47, 48) et des bagues-synchro (51, 52) sont disposées de part et d'autre du crabot (44), caractérisé en ce que les corps de butée sont formés par des pattes latérales (53, 54) sur les bagues-synchro correspondantes (51, 52), dont les extrémités (56, 47) font respectivement face, à distance, au flanc (67, 68) de l'autre bague-synchro (51, 52).

6. Dispositif de synchronisation selon la revendication 4 ou 5, caractérisé en ce que les faces de verrouillage (32; 65) ne sont formées que sur les flancs des appendices (31) ou selon le cas des pattes (53, 54) des bagues-synchro (14, 15; 51, 52), et coopèrent avec des faces complémentaires (33; 66) qui sont formées sur les parois des rainures (24; 55) disposées dans le crabot (20; 44) pour recevoir les corps de butée (26; 54).

7. Dispositif de synchronisation selon la revendication 6, caractérisé en ce que l'angle (38) des faces de verrouillage (33) par rapport au sens axial est supérieur à l'angle correspondant (39) aux extrémités des dents du crabot (20) et de la roue dentée (5) qui doivent être mutuellement engrenées.

8. Dispositif de synchronisation selon l'une des revendications précédentes, caractérisé en ce que l'angle de rotation ($\Theta$) des bagues-synchro (14, 15) par rapport au crabot (20), angle qui est délimité par l'assemblage positif, agissant dans le sens périphérique, entre le crabot (20) et la bague-synchro (14, 15), est supérieur, d'au moins la moitié du pas angulaire ($\alpha$) des dents (19) du crabot (20) et de la roue dentée (4, 5), à l'angle de rotation ($\beta$) dû à l'expansion des faces de verrouillage (32, 33).

Fig. 1

Fig. 2

Fig. 3

Fig. 4

Fig. 5

Fig. 6